# EUROPEAN PATENT APPLICATION

(11) **EP 1 615 045 A1**
(43) Date of publication of application: **11.01.2006**
(21) Application number: 04254080.7
(22) Date of filing: 07.07.2004
(51) Int. Cl.: G01S 3/786, G06T 7/20, G06F 3/033

(54) **Optical detection of relative motion**

(71) Applicant: STMicroelectronics Limited, Marlow, Buckinghamshire SL7 1YL (GB)
(72) Inventor: Raynor, Jeffrey, Edinburgh EH12 5HZ (GB)
(74) Representative: Cooper, John

(57) **Abstract**

In an apparatus such as an optical mouse, a lens (14) images a surface (12) illuminated by a light source (10) onto an image sensor (16). The output of the image sensor (16) is read out and converted to digital format (18) and the digitised signal is processed (20) to derive motion information by correlation of successive frames. The input to the image processing (20) is passed through a high-pass filter (22).

## Description

This invention relates to the analysis of images to detect motion. The invention is particularly applicable to optical computer pointing devices (mice) and will be principally described with reference to that application. However, the invention is equally applicable to other situations in which it is desired to detect motion from sequential images. The invention also relates to integrated circuits adapted for this purpose.

Optical mice have advantages in comparison with those which rely on electromechanical devices incorporating balls or rollers. It is known (see, for example, US 5,729,008) to provide an optical mouse in which a light beam is projected onto a work surface such as a mouse mat; the resulting illuminated area of work surface is imaged by a 2D image sensor to produce a sequence of images, and XY movement signals are derived by signal processing which is based on correlation of sequential images.

This known technique requires the work surface to have sufficient granularity to provide image detail to enable the correlation to be made. It is also prone to errors caused by optical deficiencies such as non-uniform illumination of the work surface (which may be caused by misalignment of the projection system), poor focus of the imaging lens, and non-perpendicularity of the sensor axis with respect to the work surface.

US 6,603,111 describes the use of spatial filtering in computer mice, but only in the context of enhancing motion along specific axes (45 degrees to the X and Y axes).

One object of the present invention is to provide a means of overcoming or reducing these problems. More generally, the present invention seeks to provide improved processing of sequential image signals involving correlation between successive images.

Accordingly the present invention provides a method of detecting relative motion between an optical assembly and an adjacent surface, the method comprising:
illuminating the surface;
imaging the illuminated surface onto an image sensor;
generating picture signals representing sequential frames of said image; and
deriving motion information by correlating successive frames;
characterised by high-pass filtering said picture signals before performing said correlation.

The picture signals preferably are in, or are converted into, digital form before being subjected to high-pass filtering. The filtering is preferably performed by a matrix operation.

In a further embodiment, the method further comprises the step of pre-processing the digital signals before being subject to the filtering. Said pre-processing most preferably comprises a correlated double sampling (CDS) method.

From another aspect, the invention provides apparatus capable of detecting relative motion between the apparatus and an adjacent surface, the apparatus comprising:
a light source arranged to project a light beam towards said surface to illuminate the surface;
lens means mounted to focus an image of the illuminated surface onto an image sensor;
the image sensor generating picture signals representing sequential frames of said image; and
image processing means operable to perform correlation on successive frames of said picture signal to derive an output representing said relative motion;
characterised by a high-pass filter interposed between the image sensor and the image processing means.

In a preferred embodiment, the image sensor comprises a pixel array in combination with read-out and analog-to-digital conversion circuits, and the high-pass filter is interposed between the analog-to-digital conversion circuit and the image processing means.

The high-pass filter is preferably configured to apply a matrix operation to the digitised signal.

The high-pass filter may include gain control means for separately adjusting the gain of high pass and low pass channels.

In a further preferred embodiment, the image sensor comprises image pre-processing means interposed between the analog-to-digital conversion circuit and the high-pass filter.

The apparatus of the invention suitably comprises or forms part of an optical mouse.

A further aspect of the present invention resides in an integrated circuit comprising a light-sensitive image plane forming an array of pixels; a read-out circuit operable to read out pixel values to form a picture signal; analog-to-digital conversion means operable to convert said picture signal to digital format; and image processing means operable to perform correlation on successive frames of the picture signal to derive information therefrom. The integrated circuit is characterised by a high-pass filter connected between the analog-to-digital conversion means and the image processing means.

The high-pass filter may be configured to apply a matrix operation to the digitised signal, and may include gain control mans for separately adjusting the gain of high pass and low pass channels.

In a further preferred embodiment, the integrated circuit comprises image pre-processing means interposed between the analog-to-digital conversion circuit and the high-pass filter.

An embodiment of the invention will now be described, by way of example, with reference to the drawings, in which:
Fig. 1 shows a known arrangement in an optical mouse;
Fig. 2 is a similar schematic diagram of an optical mouse according to a first embodiment of the present invention;
Fig. 3 is a similar schematic diagram of an optical mouse according to a second embodiment of the present invention;
Fig. 4 illustrates in more detail a filter used in Figs. 2 and 3; and
Fig. 5 shows one example of filter matrix which may be used in the embodiment of Figs. 2-4.

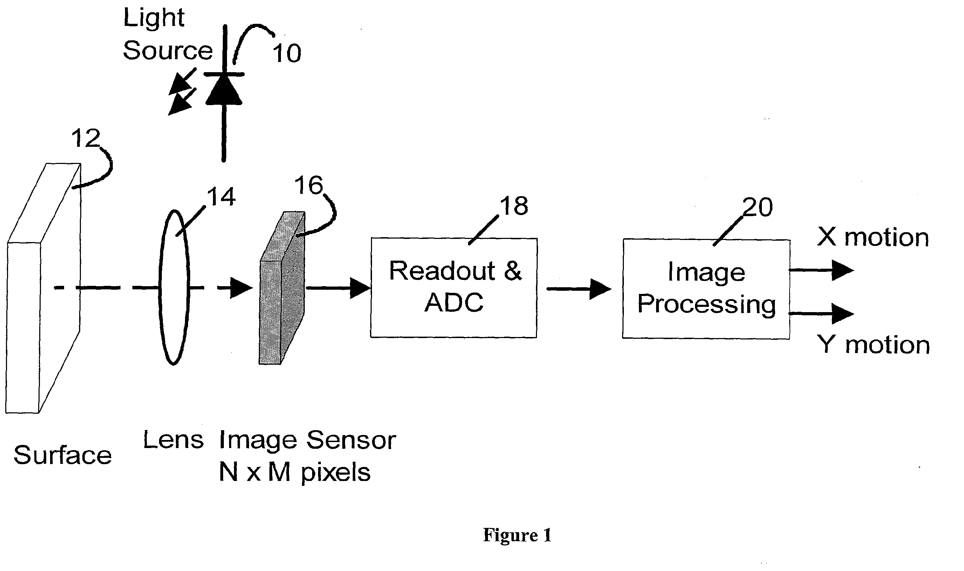

Referring to Fig. 1, in a known optical mouse a light source 10, such as a LED, illuminates a work surface 12. The illuminated surface 12 is imaged by a lens 14 onto an image sensor 16. Lens 14 is shown diagrammatically in Fig. 1; it will be understood that it may be implemented by a single lens or by more sophisticated imaging optics.

The image sensor 16 will typically be a sensor having a two-dimensional array of NxM pixels, such as a CMOS single chip sensor. The output of the image sensor 16 is read out and converted to digital form in read-out and ADC circuit 18 in a manner well known *per* se to provide digital image data of sequential frames to image processing circuit 20.

The image processing circuit derives X and Y motion of the mouse relative to the work surface 12 by applying correlation techniques to successive image frames. Such techniques are well established in the art and will not be described here.

The image processing requires the digitised image to feature a minimum amount of texture, contrast, granularity, and uniformity of illumination.

The image processing can be adversely affected by factors such as non-uniform illumination of the work surface and poor alignment of the optics such as the lens 14 not having its optical axis truly perpendicular to the work surface, or the image plane of the sensor not being truly parallel to the work surface.

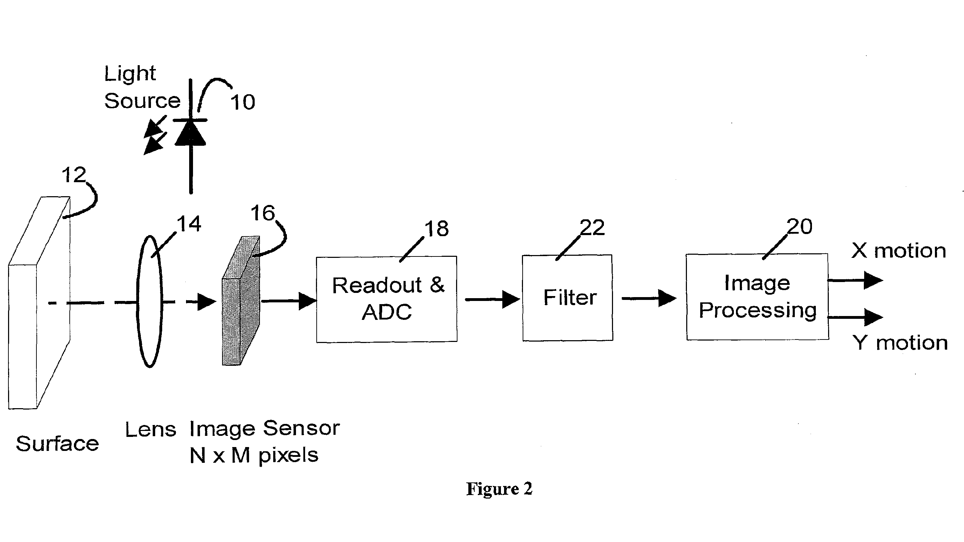

Referring to Fig. 2, a first embodiment of the present invention contains the same elements as in Fig. 1, denoted by the same reference numerals. In the embodiment, however, a high-pass filter 22 is interposed between the read-out and ADC circuit 18 and the image processing circuit 20.

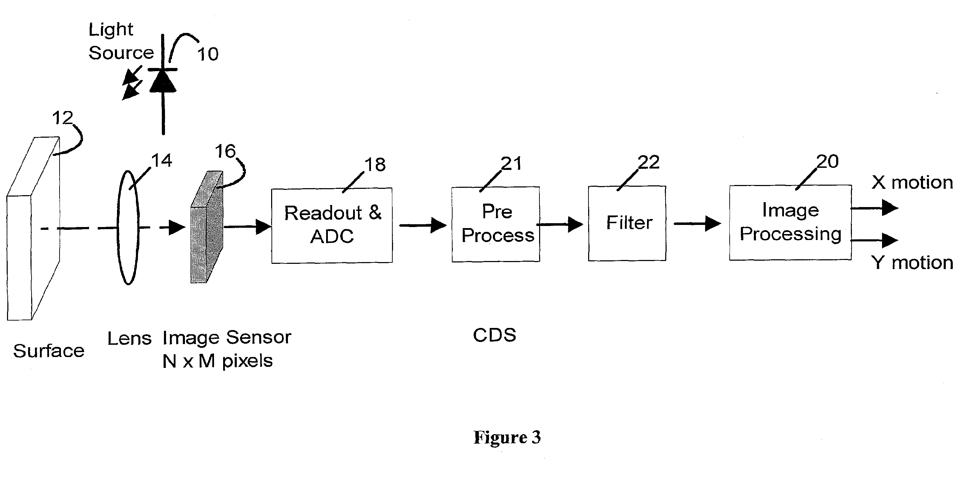

Fig. 3 shows a second embodiment, which comprises the same elements as in Fig. 2, denoted by the same reference numerals. In this embodiment, however, an image pre-processing means 21 is interposed between the ADC 18 and the image processing means 20.

The image pre-processing means can be used to manipulate the detected signals in order to increase the performance of the downstream correlation, for example by detecting and removing noise from the detected image, or removing offset from the detected image. Any suitable noise reduction technique can be used, for example, correlated double sampling (CDS), either in standard or modified form.

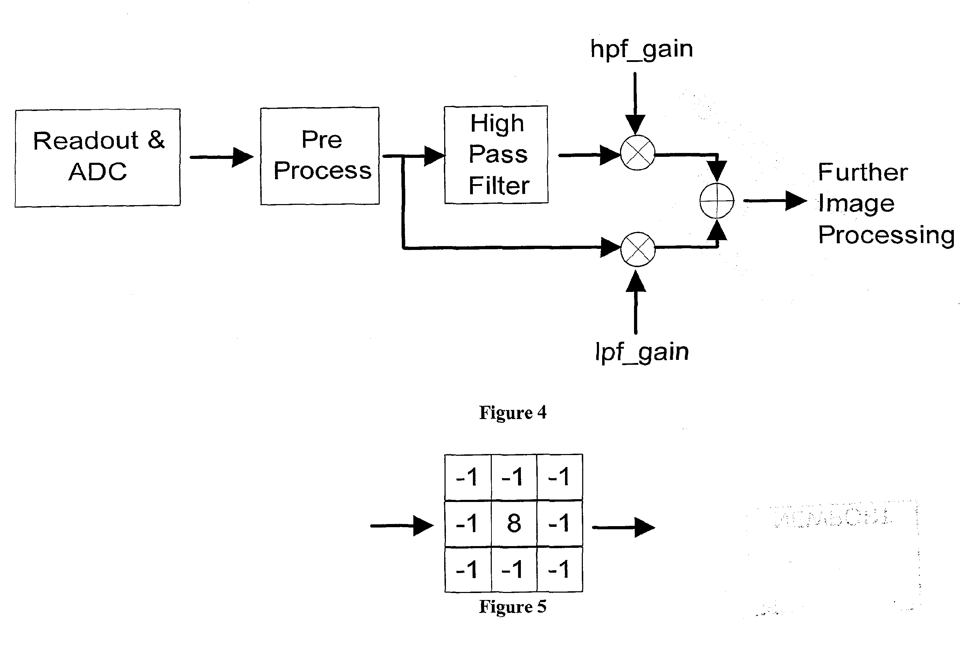

Many methods to high-pass filter an image are known to those in the art. On of the simplest methods uses a 3x3 matrix operation shown in Fig. 5. This provides a spatial high pass filter, which removes image DC components and amplifies pixel-to-pixel transitions.

Fig. 4 shows a generalised representation of the filter step, with the possibility of tuning high-pass and low-pass gain. The gain tuning can be manual or automatic, for example in a loop that analyses image statistics.

The filtering of the present invention assists motion detection on low granularity surfaces or in non-optimised lens focus conditions by enhancing high spatial frequencies and reducing low frequency shading effects, for instance where the axis of the sensor is not perfectly perpendicular.

It will be readily appreciated that the circuitry shown in Fig. 2 or Fig. 3 can be incorporated into a single integrated circuit chip. The image sensor 16 may suitably be a CMOS image sensor, and the other circuits can then be readily formed in the same CMOS chip. In a CMOS image sensor, the pixel readout will be analog which is then converted to digital, but the invention can be applied to other forms of sensor, including those giving a direct digital output.

Attention is drawn to our copending application (ref. P37236) filed concurrently and incorporated herewith by reference, which makes use of the filtering technique claimed herein but has claims directed to other features of an optical mouse.

## Claims

1. A method of detecting relative motion between an optical assembly and an adjacent surface, the method comprising:
illuminating the surface;
imaging the illuminated surface onto an image sensor;
generating picture signals representing sequential frames of said image; and
deriving motion information by correlating successive frames;
**characterised by** high-pass filtering said picture signals before performing said correlation.

2. The method of claim 1, in which the picture signals are in, or converted into, digital form before being subjected to high-pass filtering.

3. The method of claim 2, in which filtering is performed by a matrix operation.

4. The method of claim 2 or claim 3, further comprising the step of pre-processing the digital signals before performing the step of high-pass filtering.

5. The method of claim 4, wherein the step of pre-processing the digital signals comprises correlated double sampling (CDS).

6. Apparatus capable of detecting relative motion between the apparatus and an adjacent surface, the apparatus comprising:
a light source (10) arranged to project a light beam towards said surface (12) to illuminate the surface (12) ;
lens means (14) mounted to focus an image of the illuminated surface (12) onto an image sensor (16,18); the image sensor (16,18) generating picture signals representing sequential frames of said image; and
image processing means (20) operable to perform correlation on successive frames of said picture signal to derive an output representing said relative motion;
**characterised by** a high-pass filter (22) interposed between the image sensor (16,18) and the image processing means (20).

7. Apparatus according to claim 6, in which the image sensor comprises a pixel array (16) in combination with read-out and analog-to-digital conversion circuits (18), and the high-pass filter (22) is interposed between the analog-to-digital conversion circuit and the image processing means (20).

8. Apparatus according to claim 7, in which the high-pass filter (22) is configured to apply a matrix operation to the digitised signal.

9. Apparatus according to any of claims 6 to 8, in which the high-pass filter (22) includes gain control means for separately adjusting the gain of high pass and low pass channels.

10. Apparatus according to any of claims 7-9, further comprising image pre-processing means interposed between the analog-to digital conversion circuit and the high-pass filter.

11. Apparatus according to claim 10, wherein the image pre-processing means comprises correlated double sampling means.

12. An optical mouse comprising apparatus capable of detecting relative motion between the apparatus and an adjacent surface, the apparatus comprising:
a light source (10) arranged to project a light beam towards said surface (12) to illuminate the surface (12);
lens means (14) mounted to focus an image of the illuminated surface (12) onto an image sensor (16,18); the image sensor (16,18) generating picture signals representing sequential frames of said image; and
image processing means (20) operable to perform correlation on successive frames of said picture signal to derive an output representing said relative motion;
**characterised by** a high-pass filter (22) interposed between the image sensor (16,18) and the image processing means (20).

13. An optical mouse according to claim 12, in which the image sensor comprises a pixel array (16) in combination with read-out and analog-to-digital conversion circuits (18), and the high-pass filter (22) is interposed between the analog-to-digital conversion circuit and the image processing means (20).

14. An optical mouse according to claim 13, in which the high-pass filter (22) is configured to apply a matrix operation to the digitised signal.

15. An optical mouse according to any of claims 12 to 14, in which the high-pass filter (22) includes gain control means for separately adjusting the gain of high pass and low pass channels.

16. An optical mouse according to any of claims 12 to 15, further comprising image pre-processing means interposed between the analog-to digital conversion circuit and the high-pass filter.

17. An optical mouse according to claim 16, wherein the image pre-processing means comprises correlated double sampling means.

18. An integrated circuit comprising:
a light-sensitive image plane (16) forming an array of pixels;
a read-out circuit (18) operable to read out pixel values to form a picture signal;
analog-to-digital conversion means (18) operable to convert said picture signal to digital format; and
image processing means (20) operable to perform correlation on successive frames of the picture signal to derive information therefrom;
**characterised by** a high-pass filter (22) connected between the analog-to-digital conversion means (18) and the image processing means (20).

19. An integrated circuit according to claim 18, in which the high-pass filter (22) is configured to apply a matrix operation to the digitised signal.

20. An integrated circuit according to claim 18 or claim 19, in which the high-pass filter (22) includes gain control mans for separately adjusting the gain of high pass and low pass channels.

21. An integrated circuit according to any of claims 18 to 20, further comprising image pre-processing means interposed between the analog-to digital conversion means and the high-pass filter.

22. An integrated circuit according to claim 21, wherein the image pre-processing means comprises correlated double sampling means.
